# EUROPEAN PATENT SPECIFICATION

(11) **EP 2 553 605 B1**
(45) Date of publication and mention of the grant of the patent: **20.05.2020**
(21) Application number: 11713331.4
(22) Date of filing: 28.03.2011
(51) Int. Cl.: G06F 17/21

(54) **TEXT CLASSIFIER SYSTEM**
TEXTKLASSIFIZIERUNGSSYSTEM
SYSTÈME DE CLASSIFICATION DE TEXTES

(30) Priority: 26.03.2010 EP 10250613
(43) Date of publication of application: 06.02.2013
(73) Proprietor: British Telecommunications public limited company, London EC1A 7AJ (GB)
(72) Inventor: THOMPSON, Simon, Giles, London EC1A 7AJ (GB); NGUYEN, Duong, Thurc, London EC1A 7AJ (GB); THINT, Marcus, Reston, VA 20101 (US); GHARIB, Hamid, London EC1A 7AJ (GB)
(74) Representative: British Telecommunications public limited company Intellectual Property Department
(86) International application number: PCT/GB2011/000441
(87) International publication number: WO 2011/117593

(56) References cited:
- Mark M. Kornfein, Helena Goldfarb: "A Comparison of Classifcation Techniques for Technical Text Passages", Proceedings of the World Congress on Engineering 2007, vol. II 2 July 2007 (2007-07-02), 4 July 2007 (2007-07-04), XP002598045, WCE 2007, London, U.K. Retrieved from the Internet: URL:http://www.iaeng.org/publication/WCE20 07/WCE2007_pp1072-1075.pdf [retrieved on 2010-08-13]
- I. PILÁSZY: "Text Categorization and Support Vector Machines", PROCEEDINGS OF 6TH INTERNATIONAL SYMPOSIUM OF HUNGARIAN RESEARCHERS ON COMPUTATIONAL INTELLIGENCE, 18 November 2005 (2005-11-18), 19 November 2005 (2005-11-19), XP002598137, Budapest, Hungary Retrieved from the Internet: URL:http://conf.uni-obuda.hu/mtn2005/Pilas zy.pdf [retrieved on 2010-08-25]

## Description

The present invention relates to a text classifier system and in particular to a classifier system for use with informal text sources such as online content generated within social networking sites, etc.

Social networking sites and other Web 2.0 services allow users to create comments or content regarding the goods and services that they have used and for other users to then add further comments. For example, groups on Facebook or Twitter trends can quickly be established which may make unfavourable comments regarding a business's activities or products, leading to subsequent brand damage for the business concerned. Given the large number of social networking sites, blogs, message boards, etc. it is not a practical proposition for a business or enterprise to monitor all of the comments, messages, user generated content, etc., that is generated in order to be able to respond to untrue or unfavourable information.

A known system for monitoring social networks is provided by Radian6 (see http://www.radian6.com). The system extracts relevant posts from social networks, and other sources of user comments, which can be categorised, prioritised and then assigned to an agent for subsequent processing. The classification of a post as being relevant is based solely on a set of keywords. This can be seen in document "A comparison of Classification Techniques for Technical Text Passages" of Mark. M. Kornfein and Helena Goldfarb, Proceedings of the World Congress on Engineering 2007, vol. II 2 July 2007, London, U.K. and in document "Text Categorization and Support Vector Machines" of Istvan Pilaszy, Proceedings of the 6-th International Symposium of Hungarian Researchers on Computational Intelligence, 18 November 2005, Budapest, Hungary.

According to a first aspect of the present invention there is provided a method of classifying a text passage, the method comprising the steps of: a) defining a plurality of text categories; b) analysing the contents of a text passage; c) determining a similarity parameter for the text passage when compared with each of the plurality of text categories; d) if the maximum value of the similarity parameter does not satisfy a matching condition, associating the text passage with a further category; e) otherwise classifying the text passage with a trainable text classification process such that the text passage is associated with one or more of the plurality of text categories, characterised in that the method comprises the further step of: f) training the trainable text classification process using a combination of: i) one or more training samples comprising one or more words selected from a predetermined text passage, and the frequency that the one or more selected words occur within a training corpus which comprises a plurality of predetermined text passages; ii) and one or more user-specified phrases, wherein the trainable text classification process is trained prior to the execution of step e).

Preferably the trainable text classification process comprises a support vector machine algorithm and is trained in step f) using a ratio of substantially one training sample to three user-specified phrases. The ratio of user-specified phrases to training samples may be controlled.

The training samples may be selected by extracting desired keywords and/or multiple word phrases from the text passage. Furthermore, the training samples can be selected in accordance with the grammatical structure of the text passage and/or in accordance with the presence of noun phrases and/or verb phrases in the text passage. The training samples may be selected by deleting stopwords and/or common phrases from the text passage.

According to a second aspect of the present invention there is provided a system comprising one or more processors and one or more memory means, the system being configured, in use, to: i) receive a text passage; ii) classify the text passage in accordance with a method as described above; and iii) process the text passage in accordance with the one or more categories that the text passage is associated with.

Furthermore, the system may be configured, in use, to iv) determine sentiments expressed in the text passage by detecting pre-defined words and/or expressions comprised within the text passage, such that the processing in step iii) is performed in accordance with both the one or more categories that the text passage is associated with and the sentiments determined in step iv).

According to further aspects of the present invention there are provided a data carrier for use in a computing device, the data carrier comprising computer executable code which, in use, performs a method as described above and an apparatus comprising one or more central processing units, one or more data storage means and a network interface, the apparatus, in use, being configured to perform a method as described above.

Embodiments of the present invention will now be described, by way of example only, with reference to the accompanying drawings in which:
Figure 1 shows a schematic depiction of a number of components that used in a text scraping process;
Figure 2 shows an example of a web page from a news site;
Figure 3 shows a schematic depiction of a classifier generator
Figure 4 shows a schematic depiction of a system according to the present invention which is configured to perform a method according to the present invention; and
Figure 5 shows a schematic depiction of a general purpose computing apparatus suitable for executing a method according to the present invention.

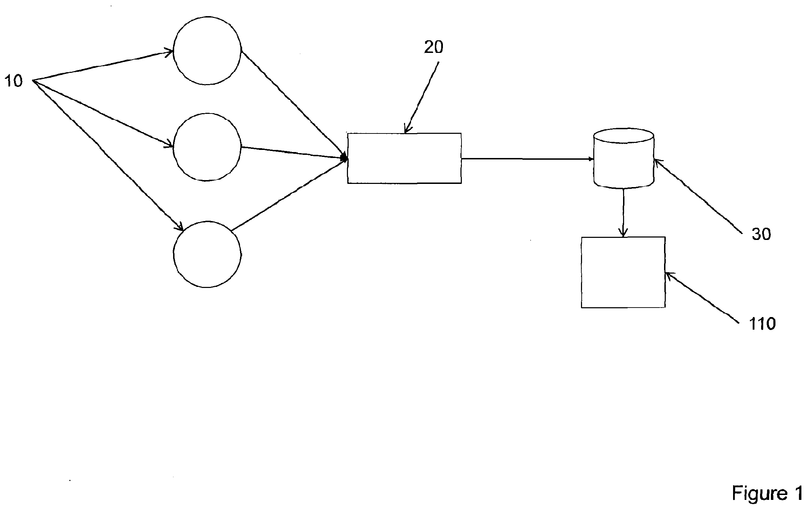

Figure 1 shows a schematic depiction of a number of components that used in a text scraping process that may be used in conjunction with a text classifier system according to the present invention (see below). Figure 1 shows a schematic depiction of a plurality of web servers 10 which comprise content that may be of interest to a party, such as an individual, business or other enterprise. The content from one or more web servers 10 may be analysed by web page analyser 20 and the result of this analysis is one or more content extraction schema (CES), which may be stored within CES database 30.

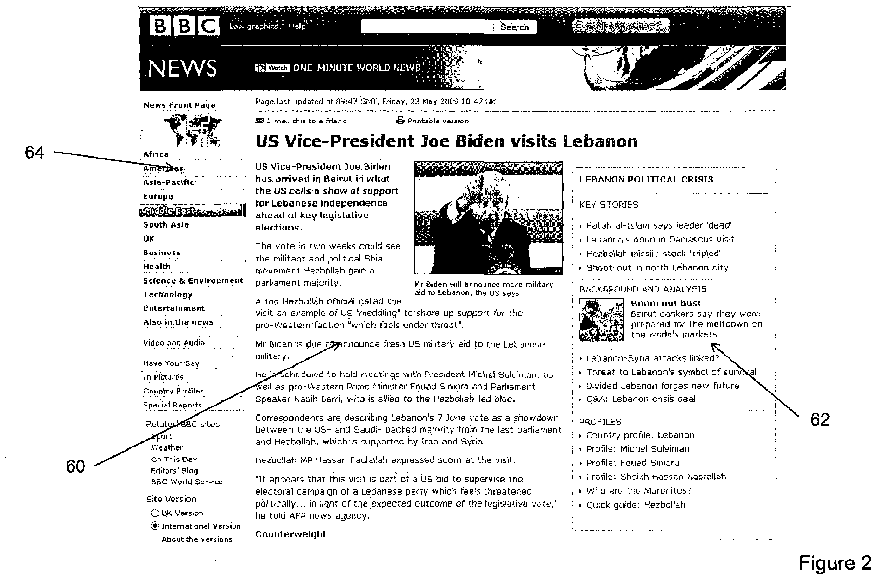

Typically, only a subset of the contents of a web site will be of interest to a particular user and this will be referred to as 'relevant content' in the following discussion and detailed description of the present invention. Each user can select their choice of relevant content for each web site or type of web site. Thereafter, only relevant content which matches these selections will be extracted from such web sites. Figure 2 shows an example of a web page from a news site; in this case the user may only be interested in the main news story 60 shown on that page and not interested in the subject list 64 in the left-hand column or the list of other news stories 62 in the right-column.

Each web site normally consists of a set of web pages. Each page is internally encoded in a mark-up language, such that the page consists of a set of mark-up elements. An example of a mark-up language is HTML (Hyper Text Mark-up Language). Pages encoded in HTML consist of a set of HTML elements. The elements provide both the contents of the page as well as its 'look and feel'. The elements are normally embedded within each other, forming one or more element hierarchies. The web page analyser 20 identifies the set of mark-up elements whose contents are collectively the same as the relevant content. Whilst it is relatively straight forward to find an HTML element in the higher levels of an element hierarchy whose contents includes the relevant content, the content of such an element content may also comprise a considerable amount of contents which has not been defined as being relevant. Avoiding the extraction of irrelevant text is more complex and is one of the key functions of the web page analyser.

In order for the web page analyser to be able to determine which HTML elements within a web page correspond to selected or defined relevant content it is necessary to undergo a training process. During this training process a number of samples of the relevant content of interest, referred to as training texts, are supplied to the web page analyser, for example by entering the URLs which refer to the web pages containing the training texts. For each training text, the web page analyser searches the content of the relevant web page to determine the set of HTML elements whose contents match, as closely as possible, the supplied training text. Each element in the set of HTML elements should be uniquely identifiable within the HTML-encoded page. However, it is possible for an element to be used more than once within the page. In this case, the web page analyser will add two types of identification to the element to make it uniquely identifiable. Firstly, the web page analyser will identify the unique sequence of ancestors of the element, that is, its parent element, grand-parent element, and so on. Secondly, the web page analyser will determine the instance number of the element (for example the third or fifth instance) among the set of instances of that element.

The resulting set of elements will be referred to as a Content Extraction Schema (CES). An example of such a CES is given below:

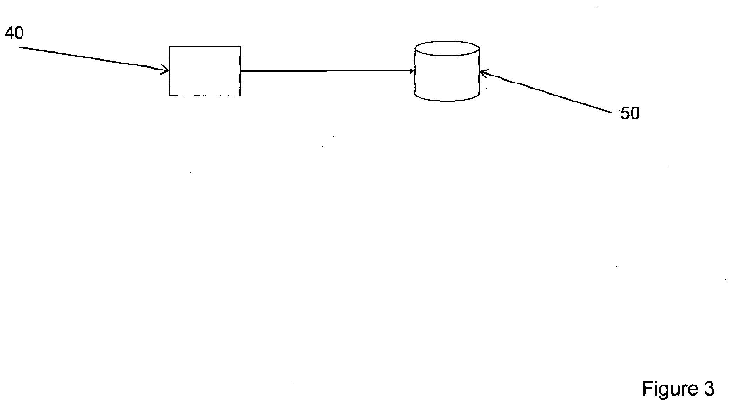

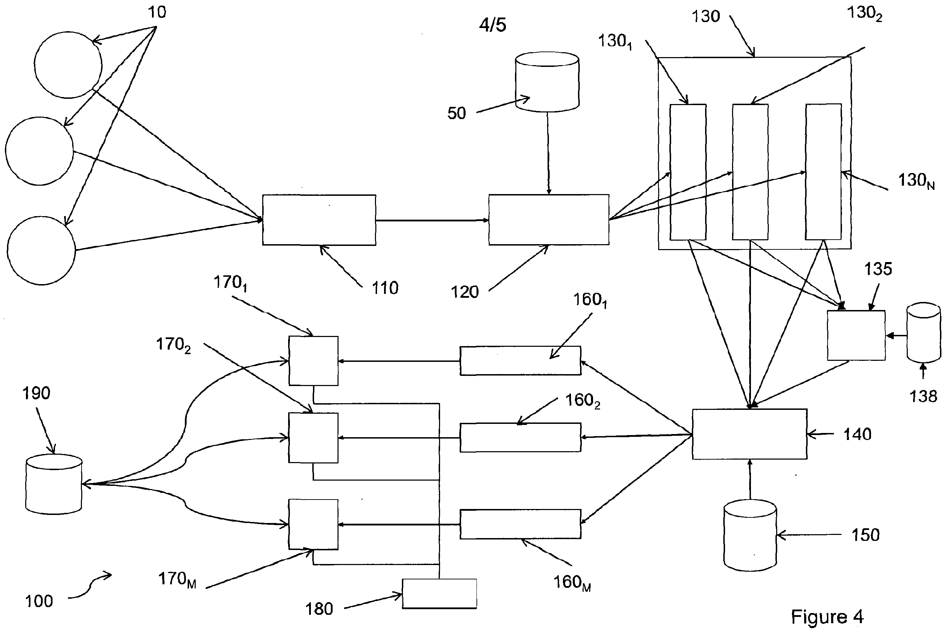

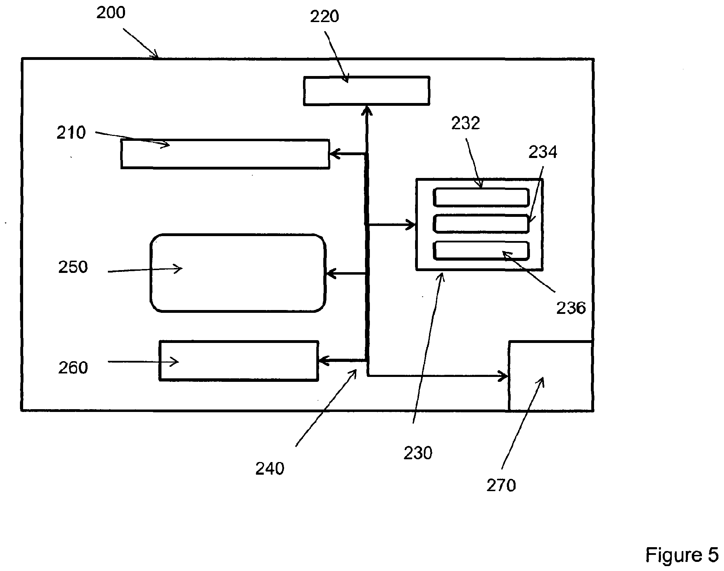

```
 <Schema name="Schema1" version="1">
   <PropertyLists role="NewsItemPropertiesContainer"
   acceptanceThreshold="60%" firstProperty="Title">
           <Property role="TitleContainer" sourceElem="<table>"
           sourceElemInstanceNum="3">
               <AncestorList>
                   <Ancestor> <body> </Ancestor>
                   <Ancestor> <html> </Ancestor>
               </AncestorList>
           </Property>
   </PropertyLists>
   </Schema>
```

As the web page analyser receives a number of training samples, for example three, it will generate that number of CESs, one for each of the training samples. The user also specifies an acceptance-threshold (e.g. 60%) that is used to determine which CES, from the generated ones, should be selected for future use. The acceptance-threshold indicates that if N CESs are generated in total then the one whose occurrence frequency is at least equal to the acceptance-threshold will be selected as the final CES for future use. Initially, the first three CESs are compared and if they match each other (i.e. its frequency is 100%) then anyone of them can be selected for future use, stored in the CES database and the training process is terminated. A stored CES may be associated with an individual user, or a group of users, such that content identified by the CES can be returned to the user(s) that have expressed an interest in that content.

If the first three CESs do not match, there may be two possibilities: (i) two of them match each other, (ii) none of them match another one. In each of the two cases, each CES will become a candidate CES to be selected for future use. The occurrence frequency of each CES is also computed. In case (i), the two matching CESs will become a single candidate CES with occurrence frequency 67% (2 divided by 3) and the third CES will have occurrence frequency of 33%. Given an acceptance-threshold of 60%, any of the two matching CESs can be selected as the final CES. In case (ii), the occurrence frequency of each candidate CES will be 33% (1 divided by 3). Given that none has reached the required 60% acceptance-threshold, the training process is then repeated to generate a new CES which will then be compared with the existing candidate CESs. If a match is found the occurrence frequency of the matching candidate is increased accordingly. If, on the other hand, there is no match, the new CES will be become a candidate CES itself with its own occurrence-frequency (1 divided by the number of CESs generated up to that point in time).

Two CESs may match even if they are not identical provided that they have common patterns. For example, consider the following three elements from three CESs:

```
 <div id="post_message_1642712">
 <div id="post_message_1642531">
 <div id="post_message_1642573">
```

Here, it can be seen that the common pattern is:

```
 <div id="post_message_">
```

and accordingly the three CESs match each other. The common pattern can be stored as:

```
 <Schema name="Schema1" version="1">
   <PropertyLists role="NewsItemPropertiesContainer"
   acceptanceThreshold="60%" firstProperty="Title">
           <Property role="TitleContainer" sourceElem="<div
           id="post_message_">" sourceElemInstanceNum="1">
          <AncestorList>
                   <Ancestor><table border=0 width=862></Ancestor>
                   <Ancestor><html></Ancestor>
          </AncestorList>
           </Property>
   </PropertyLists>
   </Schema>
```

This schema can then be selected for future use and the method terminated. It will be understood that although the preceding discussion has been in relation to HTML content, HTML is merely an example of a mark-up language. The present invention is equally applicable to other mark-up languages, such as, for example JSON or XML.

It should be understood that the text scraping method described above with reference to Figures 1 & 2 does not comprise a part of the present invention. Any other text scraper system that is capable of automatically recognising and extracting relevant content from web servers, streaming text systems (for example, RSS, STOMP, ATOM, etc.) or other online data systems, may be used with the text classifier.

Figure 3 shows a schematic depiction of a classifier generator 40 which receives sets of keywords and sample text passages that define and classify particular text categories. These keywords and text passages are processed by the classifier generator 40 and the results stored within a classifiers database 50. The keywords and sample text passages may be provided by one or more domain experts.

A classifier may categorize inputs to multiple output classes, but such operation of classifying inputs I_{A}, I_{B}, I_{C} ... to outputs O₁, O₂, O₃... constitute solving one problem, using model Cm1 learned by the classifier. A different problem of classifying inputs I_{α}, I_{β}, I_{γ} to outputs O_{I}, O_{II}, O_{III} may require model Cm2. Consequently, the classifier generator 40 supports the training process of the classifier (further described below) to generate multiple classifier models Cm1...CmN, and these N models are stored in classifiers database 50. The content of these models specify values for parameters related to the support vector machine (see below). Hence, this system design provides multi-organization support, as the same classifier system may be deployed to solve different problems.

Figure 4 shows a schematic depiction of a text classifier system 100 according to the present invention which is configured to perform a method according to the present invention. The system 100 comprises classifier database 50, text classifier and text filter module 120, text category storage means 130, which comprises text categories 130₁, 130₂, ..., 130_{N}, sentiment detector 135, sentiment database 138, job allocator 140, allocation preference database 150, allocated job queues 160₁, 160₂, ..., 160_{M}, agents 170₁, 170₂, ..., 170_{N}, agent co-ordinator 180 and reply database 190. A text scraper 110 is configured to receive data from web servers 10 and the agents 170₁, 170₂, ..., 170_{N} are configured to return appropriate replies to the web servers 10. The web servers 10 and the text scraper 110 do not from a part of the system 100.

It should be understood that the term web server should be construed widely such that it comprises other forms of content that accessed via communications networks, such as intranets or the internet, such as social networking sites, messaging sites, blogs, forums, sites for hosting multimedia content such as video, audio, photographs, user generated content, etc.

The text scraper extracts relevant content from the web servers (as described above or in a similar manner). The relevant content extracted by the text scraper 110 is sent to the text classifier and text filter module 120. The text classifier and filter module is connected to the classifiers database 50 such that the text classifier and filter module can access the various text category classifications which are held within the classifiers database. The function of the text classifier and filter module is to classify one or more items of relevant content supplied by the text scraper such that each of the items of relevant content can be placed into one or more of the pre-defined text categories 130₁, 130₂, ..., 130_{N} which are stored within the text category storage means 130.

The text classifier and filter module comprises a trainable text classifier which can categorise the text supplied by the text scraper into one or more categories. It works based on support vector machine (SVM) algorithm, forming hyper-planes to separate keyword features into designated class labels during supervised training, to minimize errors in the training sample and maximize separation margins between classes. It is known to use SVM algorithms in text classification (see, for example, T. Joachims, "Text categorization with support vector machines: learning with many relevant features," Machine Learning: ECML-98, vol 1389, Heidelberg).

It will be understood by those skilled in the art that text classification methods other than the support vector machine algorithm may be used. Suitable alternate classification methods that are known in the prior art include a naive Bayes algorithm, K-nearest neighbour algorithm, back propagated trained neural networks, rule induction algorithms, tree induction algorithms, etc. The SVM algorithm is preferred as it is capable of being trained in a reasonable period of time.

Typical text classification takes place in the context of formal written texts, such as newspaper articles, academic papers, product literature, business reports, etc., which are almost always written in a style that is grammatically correct, properly punctuated and contain limited or no slang expressions. In such cases, the input features to the text classifier are human specified keywords and/or the individual words from the text (excluding common 'stopwords' well known in the prior art), along with their frequency of occurrence within the text.

It will be understood readily by those skilled in the art that the text classification problem addressed by the present invention is a more difficult problem, as it entails the classification of text extracted from informal social media content, which is much more likely to include grammatical errors, missing punctuation, slang expressions, and emotional utterances (for example 'Aaargh!'). In addition to the conventional input features described above, the feature selection process for the text classifier:
(i) excludes common salutations (e.g. dear, hello, hi, hey...) and closings (e.g. thanks, regards, bye...) which are defined within a pre-specified list;
(ii) excludes miscellaneous chat phrases (e.g. hope this helps, good luck);
(iii) uses bi-grams and tri-grams (2 and 3 word phrases); and
(iv) noun-phrases and verb-phrases from complete sentences.

These noun and verb phrases can be identified using known parser tools such as nlp.stanford.edu/downloads/lex-parser.shtml or nlp.cs.berkeley.edu/Main.html#parsing. Trainable classifiers develop an internal model of salient features for each of the output categories during the training process. These features are abstract numerical or symbolic representations that are not easily comprehended or decoded by a human user. As a consequence of this, it is not possible or advisable for manual alteration of the classifier's internal feature model to adjust its performance and behaviour, without adding to the cost significantly. However, it is often desirable to inject human knowledge and control into the behaviour of the classifier. Nevertheless, it is insufficient to rely only on human specified features or rules, as they are often incomplete, error prone, or simply inadequate, especially in the realm of natural language text processing. It should be noted that if it were possible for a human operator to describe a perfect model or set of rules, then there would be no need for such an automatic classifier.

Thus, the present invention enables operator-specified key phrases to be merged into the classifier's normal training process, to allow for the development of learned features, for example term frequencies, specificity, and exceptions. It is also possible to control the impact of operator-specified features by the inclusion of high-level descriptors (such as, for example, "none", "low", "medium", "mediumHigh", "high", or "total"), which can be used to change the ratio of training samples to human specified key phrases.

This control is achieved by a user or system designer simply setting a training parameter to one of the aforementioned labels such as "medium". The classifier generator 40 translates the human-friendly descriptor to a numerical "blending factor" that is proportional to the average number of training samples per category and pre-determined via experimental studies. In one preferred embodiment, requested "low" influence presents (to the classifier) the human-specified key phrases an equal number of occurrences as the sample text passages; a blend factor multiplier of 1. A "medium" influence uses a blend factor multiplier of 2, "mediumHigh" uses 3, and "high" uses 4. In the extreme cases of "none" and "total", only the sample text passages or human-specified key phrases are presented to the classifier respectively. Since the underlying mathematical model of the SVM engine operates on a statistical basis, adjusting the frequency of terms it sees during training adapts the bias factors in the model towards a desired behaviour.

The present inventors have found that the use of the blending factor in the present invention leads to a 30% improvement in classification accuracy, when compared to using only human specified keywords (that is, the "total" setting discussed above) for a four category social media posts classification problem. Such an improvement is typically found when the ratio of training samples to human specified keywords is approximately 1:3.

The text classifier 120 further comprises a text filter module, which is not found in a conventional text classifier system. Conventionally, a text classifier will attempt to categorize any given input text to one of a number of pre-defined categories, even if the input text is not relevant to any of the categories. It can be seen that such an approach is likely to lead to undesirable results in some real-world applications. The text filter module is applied to the relevant content before the content is presented to the text classifier. The text filter module scans the relevant content to determine whether it has a reasonable similarity, to satisfy some matching criteria, to any one of the text categories. In one embodiment of the invention, the degree of similarity is based on the term vector similarity between the relevant content and each of the text categories, and the matching criteria is a threshold value which is determined empirically. It should be noted that in lieu of a singular threshold value, the decision border could be represented by the well-known prior art concept of fuzzy set; similarity value is mapped to a membership value in the fuzzy set, where the matching criteria comprises an interval of values (e.g. a set of values close to a target threshold on either side).

In the interest of computing efficiency, the term vector similarity computed is a more compact and simplified variation of a known vector space model (see P. Soucy & G.W. Mineau. "Beyond TFIDF weighting for text categorization in the vector space model, IJCAI 2005, pp 1130-1135). Input term vectors comprise the key phrases in the input text passages, which are compared to each of the human-specified reference or category term vectors. Human-specified terms may also have associated weights to indicate their importance to a specific category. Hence, a similarity metric is computed, based on the weighted percentage of matches between the input and reference term vectors for each category.

If the maximum value of the computed similarity metric does not satisfy a matching criteria (pre-determined by experiment and human inspection) then the input text passage is dissimilar to all categories of interest and the text passage is not presented to the classifier and is categorised as 'Other' or 'Rejected'. Alternatively, if the relevant content has a similarity metric value which satisfies matching criteria then the relevant content will be presented to the text classifier for processing. The combined text filter-classifier means effectively provides an additional 'none-of-the-above' category which is typically difficult to achieve via a classifier training process alone, as it is simple to provide samples of an object that belongs to a category, but more difficult to define, by examples, what does not belong to that category, as the 'negative' case can require a huge amount of training data.

After the relevant content has been assigned to one or more categories then the relevant content may be analysed further in order to determine the sentiment of the relevant content. Such information may be of use in determining overall user satisfaction with particular services. Furthermore, if the relevant content can be determined as being particularly angry in tone or language then it may be appropriate for the relevant content to be flagged as being of high priority such that it may be dealt with more promptly or by a more experienced agent.

Automated sentiment analysis is currently regarded as a research topic, due to complexities associated with multiple negations and sarcastic comments that are commonly present in natural language expressions. Hence, the sentiment detector 135 of the present invention focuses on those cases which can be detected using a set of pre-determined pattern-based rules. Pattern-based rules analyse a sentence or phrase for pre-specified conditions such as "curse words mentioned near company product", or "expression of anguish anywhere" (e.g. I'm fed up..., I've had it with...). Curse words, company products and other phrases of interest are pre-compiled and stored together with pattern-based rules in sentiment database 138. The location and proximity of words and/or phrases of interest can be specified and detected using a known method of "regular expressions", which is a computational syntax to describe the ordering pattern of characters.

In the context of the present invention, the term "sentiment" is defined as a subjective opinion embodied in a text passage such as a 'positive' review, 'negative' complaint, or distressed and/or resentful comments. Correct sentiment analysis is non-trivial, and simple keyword spotting is not reliable due to complexities of natural language, as there are many different ways to express the same message, including misleading sarcasm.

The sentiment detector module may be viewed as a supplemental enhancement to a system according to the present invention, as when such sentiments are detected then it is possible to raise the priority of the task in question. However, in the event that the sentiment detector misses angry and/or dismissive content then no errors are introduced into the system or other problems cause, beyond the failure to raise the priority of the respective task(s).

The job allocator 140 takes content which has been classified by the text classifier and filter module and then allocates that content to one of the allocated job queues 160₁, 160₂, ..., 160_{M}, with each of the allocated job queues being uniquely associated with an agent terminal 170₁, 170₂, ..., 170_{N}. The allocation of classified content as a job is undertaken on the basis of the contents of the allocation preference database 150. The allocation preference database will indicate which of the agents are logged into the system (and thus are able to receive jobs) and the preference, experience and skills for each agent in relation to each of the text categories 130. Thus, an agent will not be allocated a job that they are not able to process. The activity of an agent and the number of jobs presently in the job queue associated with an agent may also be used when allocating jobs so that the workload is spread as evenly as is possible across those agents with the appropriate skills and experience. When a job is allocated to a job queue, a time limit for the job to be processed within may be set and if the agent does not process the job within that time limit then a reminder may be sent to the agent and to the agent co-ordinator.

The main role of the agent is process jobs received from the job allocator, for example by responding to an enquiry, a question or a posting on an on-line forum. As described above, the classification of the relevant content allows the jobs to be allocated to an agent which is able to deal with the jobs. The agent can use their agent terminal 170 to login to the web server 10 where the relevant content originated from and to post an appropriate response. If required, an agent may send a proposed response from their agent terminal to a co-ordinator terminal 180 such that a co-ordinator can confirm that the details and/or the tone of the response are appropriate to the original issue. Rather than requiring an agent to log in separately to a number of different web servers (or other online resources), the agent terminal 170 may hold a profile for the agent which comprises usernames and associated passwords for a number of different web server that are frequently used. This profile held by the agent terminal 170 allows the agent to enter the response into the agent terminal and for all communication with the web server to be controlled by the agent profile executed by the agent terminal, avoiding the need for the agent to log into each of the web servers as and when it is needed. The co-ordinator is responsible for the management of a number of agents, for example that each of the agents is dealing with an expected number of jobs, monitoring the distribution of jobs across the range of categories and re-training and re-skilling the group of agents as may be appropriate. As noted above, agents may seek the approval of a co-ordinator for a particular response. A co-ordinator may become responsible for dealing with a job if there is an escalation that follows an agent's response. Those jobs that are determined to be of high priority (see above) may be sent direct to a co-ordinator for resolution.

The system shown described above with reference to Figure 4 is capable of being used across multiple organisations, or multiple different units within a single enterprise. That is, the same classifier package can be used for different problems by different organizations, once appropriate classifiers have been provided and stored within the classifier database.

It will be understood that although the preceding discussion has been in relation to HTML content, HTML is merely an example of a mark-up language. The present invention is equally applicable to other mark-up languages, such as, for example XML.

A person skilled in the art would recognise that the present invention comprises a number of different processes which can be implemented in software, which can be executed on a general purpose computing apparatus, such as a personal computer or a server computer which can be accessed by a client device or terminal.

Figure 5 shows a schematic depiction of such an apparatus 200, which comprises one or more central processing unit 210, one or more volatile data storage means 220 and one or more non volatile data storage means 230, which are interconnected by data bus 240. The apparatus further comprises display means 250, user input means 260 and network interface 270.

The apparatus may comprise integrated display means and user input means, for example a touch screen, for they may be separate, for example a conventional display screen and a keyboard and/or mouse. The non volatile data storage means may comprise one or more hard disc drives; in addition there may be provided removable non volatile data storage means, such as removable hard disc drives or optical media (for example re-writable or recordable DVDs). The network interface may be a local area network adaptor, with the LAN being connected to other LANs and wide area networks (WANs) to enable the apparatus to communicate with and exchange data with other computers. Alternatively, the network interface may be a DSL modem, or similar, that provides a connection to a WAN, such as the internet or an intranet, which enables communications with further networks.

The non volatile data storage means 230 comprises an operating system 232 and one or more application programmes 234. The operating system comprises the software that the computing apparatus requires to operate, communicate with other computers, receive input from users, display outputs and results to users, etc. Application programs 234 can be executed by the apparatus in order to provide additional functionality. Non volatile data storage means 230 further comprises computer code 236 which can be executed in order to perform a method according to the present invention, for example such as the one described above. It will be understood that the computer code 236 may comprise a single integrated application, or a number of different modules that are accessed separately to execute a method according to the present invention. Each module may perform the functionality of one or more of the processes which comprise the present invention.

A system according to the present invention may be implemented as a standalone platform which is able to receive data and/or content from a range of different online resources and web servers. Alternatively, the computer code which can be executed in order to perform a method according to the present invention may be stored on and executed by the apparatus that is used to host a social networking site, online forum, user generated content service, blogging site, messaging service, user service site etc.

In summary, the present invention provides a method, and a system, for analysing a textual passage and classifying it against a number of predetermined categories. In the event that the text passage under analysis is not sufficiently similar to any of the predetermined categories then it will be classified as belonging to a further category.

It will be understood by a person skilled in the art that a method according to the present invention is of significant utility across a range of applications and that the present invention is not to be limited to the uses discussed above.

It will be understood that the exact structure of the general purpose computing apparatus is not important as long as it is capable of executing the computer code which performs a method according to the present invention. Such computer code may be deployed to such a general purpose computing apparatus via download, for example via the internet, or on some physical media, for example, DVD, CD-ROM, USB memory stick, etc.

## Claims

1. A method of classifying a text passage, the method comprising the steps of:
a) defining a plurality of text categories;
b) analysing the contents of a text passage;
c) determining a similarity parameter for the text passage when compared with each of the plurality of text categories;
d) if the maximum value of the similarity parameter does not satisfy a matching condition, associating the text passage with a further category;
e) otherwise classifying the text passage with a trainable text classification process such that the text passage is associated with one or more of the plurality of text categories,
**characterised in that** the method comprises the further step of:
f) training the trainable text classification process using a combination of:
i) one or more training samples comprising one or more words selected from a predetermined text passage, and the frequency that the one or more selected words occur within a training corpus which comprises a plurality of predetermined text passages;
ii) and one or more user-specified phrases,
wherein the trainable text classification process is trained prior to the execution of step e).

2. A method according to Claim 1, wherein the trainable text classification process comprises a support vector machine algorithm and is trained in step f) using a ratio of substantially one training sample to three user-specified phrases.

3. A method according to Claim 1, wherein the trainable text classification process comprises one of: a naive Bayes algorithm or a k-nearest neighbour algorithm.

4. A method according to Claim 1, wherein the matching criteria comprises a singular threshold value and in step d) the text passage is associated with a further category if the maximum value of the similarity parameter does not exceed the singular threshold value.

5. A method according to Claim 1, wherein the matching criteria comprises a membership value to a predefined fuzzy set.

6. A method according to Claim 1, wherein the or each training sample are selected by extracting desired keywords and/or multiple word phrases from the text passage.

7. A method according to Claim 6, wherein the or each training sample is selected in accordance with the grammatical structure of the text passage.

8. A method according to Claim 7, wherein the or each training sample is selected in accordance with the presence of noun phrases and/or verb phrases in the text passage.

9. A method according to any of Claims 6 to 8, wherein the or each training sample is selected by deleting stopwords and/or common phrases from the text passage.

10. A method according to Claim 1, wherein the ratio of user-specified phrases to training samples can be controlled.

11. A system comprising one or more processors and one or more memory means, the system being configured, in use, to:
i) receive a text passage;
ii) classify the text passage in accordance with a method according to any of Claims 1 to 10; and
iii) process the text passage in accordance with the one or more categories that the text passage is associated with.

12. A system according to Claim 11, wherein the system is configured, in use, to
iv) determine a sentiment expressed in the text passage by detecting pre-defined words and/or expressions comprised within the text passage,
such that the processing in step iii) is performed in accordance with both the one or more categories that the text passage is associated with and the sentiments determined in step iv).

13. A data carrier for use in a computing device, the data carrier comprising computer executable code which, in use, performs a method according to any of Claims 1 to 10.

14. An apparatus comprising one or more central processing units, one or more data storage means and a network interface, the apparatus, in use, being configured to perform a method according to any of Claims 1 to 10.

## Patentansprüche

1. Verfahren zum Klassifizieren einer Textpassage, wobei das Verfahren die folgenden Schritte aufweist:
a) Definieren einer Vielzahl von Textkategorien;
b) Analysieren des Inhalts einer Textpassage;
c) Bestimmen eines Ähnlichkeitsparameters für die Textpassage im Vergleich zu jeder aus der Vielzahl von Textkategorien;
d) wenn der Maximalwert des Ähnlichkeitsparameters eine Übereinstimmungsbedingung nicht erfüllt, Zuordnen der Textpassage zu einer weiteren Kategorie;
e) ansonsten Klassifizieren der Textpassage mit einem trainierbaren Textklassifizierungsverfahren in der Art, dass die Textpassage einer oder mehreren aus der Vielzahl von Textkategorien zugeordnet ist, **dadurch gekennzeichnet, dass** das Verfahren den weiteren Schritt aufweist zum:
f) Trainieren des trainierbaren Textklassifizierungsverfahrens unter Verwendung einer Kombination von:
i) einem oder mehreren Trainingsmustern, die ein oder mehrere Wörter aufweisen, die aus einer vorbestimmten Textpassage ausgewählt sind, und der Häufigkeit, mit der das eine oder die mehreren ausgewählten Wörter in einem Trainingskorpus auftreten, der eine Vielzahl von vorbestimmten Textpassagen aufweist;
ii) und einem oder mehreren benutzerdefinierten Phrasen, wobei das trainierbare Textklassifizierungsverfahren vor der Ausführung von Schritt e) trainiert wird.

2. Verfahren nach Anspruch 1, wobei das trainierbare Textklassifizierungsverfahren einen Unterstützungsvektor-Maschinenalgorithmus aufweist und in Schritt f) unter Verwendung eines Verhältnisses von im Wesentlichen einem Trainingsmuster zu drei benutzerdefinierten Phrasen trainiert wird.

3. Verfahren nach Anspruch 1, wobei das trainierbare Textklassifizierungsverfahren eines der folgenden Elemente aufweist: einen naiven Bayes-Algorithmus oder einen k-nächsten Nachbarn-Algorithmus.

4. Verfahren nach Anspruch 1, wobei das Übereinstimmungskriterium einen singulären Schwellenwert aufweist und in Schritt d) die Textpassage einer weiteren Kategorie zugeordnet ist, wenn der Maximalwert des Ähnlichkeitsparameters den singulären Schwellenwert nicht überschreitet.

5. Verfahren nach Anspruch 1, wobei das Übereinstimmungskriterium einen Mitgliedschaftswert zu einem vordefinierten Fuzzy-Satz aufweist.

6. Verfahren nach Anspruch 1, wobei das oder jedes Trainingsmuster ausgewählt wird, indem gewünschte Schlüsselwörter und/oder mehrere Wortphrasen aus der Textpassage extrahiert werden.

7. Verfahren nach Anspruch 6, wobei das oder jedes Trainingsmuster gemäß der grammatikalischen Struktur der Textpassage ausgewählt wird.

8. Verfahren nach Anspruch 7, wobei das oder jedes Trainingsmuster gemäß dem Vorhandensein von Nominalphrasen und/oder Verbalphrasen in der Textpassage ausgewählt wird.

9. Verfahren nach einem der Ansprüche 6 bis 8, wobei das oder jedes Trainingsmuster durch Löschen von Stoppwörtern und/oder allgemeinen Phrasen aus der Textpassage ausgewählt wird.

10. Verfahren nach Anspruch 1, wobei das Verhältnis von benutzerdefinierten Phrasen zu Trainingsmustern gesteuert werden kann.

11. System mit einem oder mehreren Prozessoren und einem oder mehreren Speichermitteln, wobei das System ausgebildet ist, um beim Verwenden:
i) eine Textpassage zu empfangen;
ii) die Textpassage gemäß einem Verfahren gemäß einem der Ansprüche 1 bis 10 zu klassifizieren; und
iii) die Textpassage gemäß der einen oder mehreren Kategorien, denen die Textpassage zugeordnet ist, zu verarbeiten.

12. System nach Anspruch 11, wobei das System ausgebildet ist, um beim Verwenden
iv) ein in der Textpassage ausgedrücktes Gefühl zu bestimmen, indem vordefinierte Wörter und/oder Ausdrücke erfasst werden, die in der Textpassage enthalten sind, sodass die Verarbeitung in Schritt iii) gemäß der einen oder den mehreren Kategorien durchgeführt wird, denen die Textpassage zugeordnet ist, und den in Schritt iv) bestimmten Gefühlen.

13. Datenträger zur Verwendung in einem Computergerät, wobei der Datenträger durch einen Computer ausführbaren Code aufweist, der beim Verwenden ein Verfahren gemäß einem der Ansprüche 1 bis 10 durchführt.

14. Vorrichtung mit einer oder mehreren zentralen Verarbeitungseinheiten, einem oder mehreren Datenspeichermitteln und einer Netzwerkschnittstelle, wobei die Vorrichtung ausgebildet ist, um beim Verwenden ein Verfahren gemäß einem der Ansprüche 1 bis 10 durchzuführen.

## Revendications

1. Procédé de classement d'un passage de texte, le procédé comprenant les étapes suivantes :
a) la définition d'une pluralité de catégories de texte,
b) l'analyse des contenus d'un passage de texte,
c) la détermination d'un paramètre de similitude pour le passage de texte lorsqu'il est comparé avec chacune de la pluralité de catégories de texte,
d) l'association du passage de texte à une autre catégorie si la valeur maximale du paramètre de similitude ne satisfait pas à une condition de correspondance,
e) sinon le classement du passage de texte avec un traitement de classement de texte à capacité d'apprentissage de sorte à ce que le passage de texte soit associé à une ou plusieurs de la pluralité de catégories de texte,
**caractérisé en ce que** le procédé comprend l'étape complémentaire suivante :
f) l'apprentissage du traitement de classement de texte à capacité d'apprentissage en utilisant une combinaison :
i) d'un ou plusieurs exemples d'apprentissage comprenant un ou plusieurs mots sélectionnés à partir d'un passage de texte prédéterminé, et la fréquence avec laquelle apparaissent le ou les mots sélectionnés dans un corpus d'apprentissage qui comprend une pluralité de passages de texte prédéterminés,
ii) et d'une ou plusieurs phrases spécifiées par l'utilisateur,
dans lequel le traitement de classement de texte à capacité d'apprentissage subit un entraînement avant l'exécution de l'étape e).

2. Procédé selon la revendication 1, dans lequel le traitement de classement de texte à capacité d'apprentissage comprend un algorithme machine vectoriel de support, et il subit un entraînement lors de l'étape f) en utilisant un rapport de pratiquement un échantillon d'apprentissage pour trois phrases spécifiées par l'utilisateur.

3. Procédé selon la revendication 1, dans lequel le traitement de classement de texte à capacité d'apprentissage comprend l'un parmi : un algorithme de Bayes naïf ou un algorithme des k plus proches voisins.

4. Procédé selon la revendication 1, dans lequel les critères de correspondance comprennent une valeur de seuil singulier, et, lors de l'étape d), le passage de texte est associé à une autre catégorie si la valeur maximale du paramètre de similitude ne dépasse pas la valeur de seuil singulier.

5. Procédé selon la revendication 1, dans lequel les critères de correspondance comprennent une valeur d'appartenance à un ensemble flou prédéfini.

6. Procédé selon la revendication 1, dans lequel l'échantillon d'apprentissage, ou chacun d'entre eux, est sélectionné grâce à l'extraction de mots-clés souhaités et/ou de multiples syntagmes nominales tirées du passage de texte.

7. Procédé selon la revendication 6, dans lequel l'échantillon d'apprentissage, ou chacun d'entre eux, est sélectionné en fonction de la structure grammaticale du passage de texte.

8. Procédé selon la revendication 7, dans lequel l'échantillon d'apprentissage, ou chacun d'entre eux, est sélectionné en fonction de la présence de syntagmes nominales et/ou de syntagmes verbales dans le passage de texte.

9. Procédé selon l'une quelconque des revendications 6 à 8, dans lequel l'échantillon d'apprentissage, ou chacun d'entre eux, est sélectionné en supprimant des mots d'arrêt et/ou des phrases communes tirées du passage de texte.

10. Procédé selon la revendication 1, dans lequel le rapport des phrases spécifiées par l'utilisateur sur les échantillons d'apprentissage peut être commandé.

11. Système comprenant un ou plusieurs processeurs et un ou plusieurs moyens de mémoire, le système étant configuré, en service, pour :
i) recevoir un passage de texte,
ii) classer le passage de texte en fonction d'un procédé conforme à l'une quelconque des revendications 1 à 10, et
iii) traiter le passage de texte en fonction de la ou des catégories avec lesquelles est associé le passage de texte.

12. Système selon la revendication 11, le système étant configuré, en service, pour :
iv) déterminer un sentiment exprimé dans le passage de texte en détectant des mots et/ou des expressions prédéfinies comprises à l'intérieur du passage de texte, de sorte à ce que le traitement effectué lors de l'étape iii) soit réalisé en fonction à la fois de la ou des catégories avec lesquelles est associée le passage de texte et des sentiments déterminés lors de l'étape iv).

13. Support de données à utiliser dans un dispositif informatique, le support de données comprenant un code exécutable par ordinateur qui, en service, réalise un procédé conforme à l'une quelconque des revendications 1 à 10.

14. Appareil comprenant une ou plusieurs unités centrales de traitement, un ou plusieurs moyens de stockage de données et une interface réseau, l'appareil, en service, étant configuré pour réaliser un procédé conforme à l'une quelconque des revendications 1 à 10.
